# EUROPEAN PATENT APPLICATION

(11) **EP 1 759 583 A2**
(43) Date of publication of application: **07.03.2007**
(21) Application number: 06114795.5
(22) Date of filing: 31.05.2006
(51) Int. Cl.: A01N 37/36, A01P 13/00

(54) **Cleaning composition for removing algae and moss**

(30) Priority: 01.06.2005 BE 200500274
(71) Applicant: Houck, Frans, 1760 Roosdaal (BE)
(72) Inventor: Houck, Frans, 1760 Roosdaal (BE)
(74) Representative: Callewaert, Jean

(57) **Abstract**

The invention comprises a green deposit remover, in particular a herbicide against algae and mosses, the active substance of which is citric acid or a derivative of citric acid, like water soluble harmless salts; the herbicide consists of an aqueous solution, the only active substance of which is citric acid or a water soluble derivative of citric acid.

## Description

The invention comprises a green deposit remover, in particular a herbicide against algae and mosses. The existing herbicides for such green deposits are often harmful to the environment. They should be used with caution because of their toxicity for humans. Such herbicides usually contain quaternary ammonium compounds.

The invention wants to remedy these disadvantages by presenting a herbicide that is very safe for human beings and next to harmless to the environment.

To this extent the herbicide is formed by an aqueous solution the active substance of which is solely citric acid or a water soluble derivative of citric acid. The suitable concentration of this active compound varies between 1 % (w/w) and 25 % (w/w). The concentration of the mentioned active substance is preferably higher than 3 % (w/w), more specifically higher than 4 % (w/w) and lower than 20 % (w/w). Profitably, the herbicide contains next to 1 to 3 % (w/w) of betaine, especially cocamidopropyl betaine, and in particular 2 % (w/w) of betaine.

An interesting version of the herbicide, according to the invention, contains 0.1 to 1.0 % (w/w) of eucalyptol, specifically 0.5 %.

A preferential version of the herbicide, according to the invention, contains 0.02 % (w/w) of Patent Blue, in particular the sodium compound of the [4-(α-(4-diethylaminophenyl)-5-hydroxy-2,4-disulfophenyl-methylidene)-2,5-cyclohexadien-1-ylidene]diethyl ammonium hydroxide inner salt.

In the following description, some concrete forms and examples of the herbicide, according to the invention, are given.

This herbicide allows green deposits like algae and mosses to be removed efficiently from various materials, like concrete, facades, asbestos-cement slabs, wooden constructions, greenhouse glass, etc. It can also be applied to destroy moss in lawns.

The herbicide consists of an aqueous citric acid solution, in which the latter occurs as the only active compound for the extinction of algae and mosses, that leave green deposits.

More specifically, very good results were obtained with an aqueous solution that contains 1 to 25 % (w/w) of citric acid, especially 2-hydroxypropane-1,2,3-tricarboxylic acid monohydrate.

In order to remove algae and mosses in this way, the surface is moisturized with the aqueous solution. The herbicide is preferably applied by spraying the surface.

Visual inspection shows that the green deposit has all but completely disappeared after the herbicide has been acting for some time upon the surface, that had to be treated.

In addition to the mentioned citric acid, the product preferably contains known non-active additives such as flavouring agents, colourants and/or foaming agents.

Flavouring agents are added to give the herbicide an unattractive taste for human beings and animals. Such flavouring agent profitably consists of next to 0.0005 % (w/w) of Bitrex^{®}, more specifically denatonium benzoate.

Furthermore the herbicide contains an aroma compound providing it with a pleasant and fresh odour. Such aroma compound e.g. consists of eucalyptol, more specifically1,3,3-trimethyl-2-oxabicyclo[2.2.2]octane, of which 0.1 to 1.0 weight per cent is added. According to the invention, the herbicide contains by preference 0.5 % (w/w) of eucalyptol.

For the herbicide to stick to the surface of the construction that is to be treated, in particular to a vertical surface, a foaming agent is added. This foaming agent consists e.g. of betaine, more specifically cocamidopropyl betaine (CAPB), and it is added to the mentioned aqueous solution in a quantity of 1 to 3 weight per cent, e.g. 2 % (w/w).

The so-called Patent Blue V E131, e.g. 0.02 % (w/w), is added to the aqueous citric acid solution as a colourant. The sodium compound of a [4-(α-(4-diethylaminophenyl)-5-hydroxy-2,4-disulfophenyl-methylidene)-2,5-cyclohexadien-1-ylidene]diethyl ammonium hydroxide inner salt is the chemical name (the official IUPAC name) of this colourant.

Below, the results are reported of various experiments with some specific compositions of the herbicide, according to the invention. For these experiments, herbicides were prepared, according to the invention, with demineralised water containing 0.2 ‰ of Patent Blue V E131, 0.0005 % (w/w) of denatonium benzoate, 2 % (w/w) of cocamidopropyl betaine, 0.5 % (w/w) of eucalyptol and 3 %, 10 % and 19 % (w/w) of citric acid respectively.

In the experiments, the herbicide was applied to the surface with a spray can until the surface was completely moistened.

To examine the effectiveness of the herbicide, the presence of material of biological origin is determined by measuring the presence of adenosine triphosphate (ATP) by means of bioluminescence. All living systems generate ATP. Bioluminescence is a biological reaction in which light is produced. The quantity of light produced is proportional to the amount of biological material present.

To measure the amount of biological matter a so-called HY-LITE^{®} ATP measurement is used.

On the surface of a material that is to be tested, a 5 to 5 cm zone is sampled with an ATP-free cotton bud. This cotton bud is rinsed in a humectant, making the collected cells more permeable and liberating ATP.

Then this ATP is brought into contact with a luciferin/luciferase enzyme complex generating a reaction and a light emission. The amount of light produced is measured with a luminometer and expressed in Relative Light Units (RLU). The value obtained is directly related to the amount of biological matter that was collected with the cotton bud from the sampled surface. The luminometer used in the experiment can measure up to 100 000 Relative Light Units (RLU). The apparatus displays "overload" for higher RLU values.

A first experiment was carried out with the herbicide, according to the invention, by applying it to a vertical brick façade showing a clear green deposit. The results of the first experiment are presented in table 1.

In this way, for the untreated parts of the wall an "overload" value was systematically measured, showing that a large amount of biological matter is present on the wall.

The parts of the wall that were moistened with the herbicide, according to the invention, produce a realively low RLU value showing that the amount of biological matter on the wall has decreased.

The measurement of the amount of biological matter, according to the method described above, was carried out at different moments of time. A first measurement was performed shortly after the application of the herbicide, a second measurement was then done a day later. A third measurement was only carried out on the surface of the wall that was treated with a 19 % (w/w) citric acid solution. The latter measurement was performed after a rain-shower and nine days after the surface had been treated with the herbicide.

The measuring results in table 1 show that a large amount of material of biological origin was removed by treating the wall with the herbicide, according to the invention. The rain-shower washed away the material of biological origin on the treated surface allowing for the RLU values to vary between 4200 and 30 000. For the non-treated surface, on the contrary, no evolution of the amount of green deposit was observed. Visual control revealed hardly any green deposit on the treated surfaces.

| **Table 1:** | | | | | | |
|---|---|---|---|---|---|---|
| measured values (expressed in RLU) in the experiment with the vertical brick façade | | | | | | |

| | 3 % (w/w) | | 10 % (w/w) | | 19 % (w/w) | |
|---|---|---|---|---|---|---|
| | untreated | treated | untreated | treated | untreated | treated |
| application | overload | 55.000-100.000 | overload | 34.000-59.000 | overload | |
| 1 day | overload | 48.000-54.000 | overload | 28.000-67.000 | overload | 29.000-49.000 |
| 9 days | | | | | overload | 4.200-30.000 |

In the second experiment the herbicide, according to the invention, was spread out over part of the surface of a vertical glass plate, more specifically a greenhouse glass. The results of the corresponding ATP measurements are presented in table 2. These show that after applying the herbicide, it had to act on the surface for some time before a measurable result was obtained. A measurement one day after applying the herbicide onto the glass plate, shows that the green deposit has almost completely been removed.

After nine days and after rainfall a new measurement of the surface that was treated with a 19 % (w/w) citric acid solution was carried out.

The values measured at that time vary between 14 000 and 18 000 RLU; this shows that the material of biological origin has been removed to a large extent. Visual inspection also shows that the herbicide, according to the invention, removes the green deposit present.

| **Table 2:** | | | | | | |
|---|---|---|---|---|---|---|
| measured values (expressed in RLU) in the experiment with the vertical greenhouse glass | | | | | | |
| | 3 % (w/w) | | 10 % (w/w) | | 19 % (w/w) | |
| | untreated | treated | untreated | treated | untreated | treated |
| application | overload | overload | overload | overload | overload | overload |
| 1 day | overload | 46.000-56.000 | overload | 48.000->100.000 | overload | 70.000-82.000 |
| 9 days | | | | | overload | 14.000-18.000 |

For the third experiment the horizontal surface of a wooden beam was moistened with the herbicide according to the invention.

The measurement of the amount of ATP on the untreated wood resulted in a value between 79.000 and 90.000 RLU. After (a) treatment with the herbicide, according to the invention, this value decreased to 30 000 to 61 000 RLU depending on the citric acid concentration that was used, as shown by the results in table 3.

| **Table 3:** | | | | | | |
|---|---|---|---|---|---|---|
| measured values (expressed in RLU) in the experiment with a horizontal wooden beam | | | | | | |
| | 3 % (w/w) | | 10 % (w/w) | | 19 % (w/w) | |
| | untreated | treated | untreated | treated | untreated | treated |
| application | 79.000 | | 83.000 | | 90.000 | |
| 1 day | | 54.000-61.000 | | 34.000-41.000 | | 30.000-59.000 |

In the above-mentioned experiments a substantial reduction or a next to complete removal of the green deposit was visually noted, after the concerning surface had been moistened with the herbicide according to the invention.

A treatment with the herbicide, according to the invention, was also performed on the surfaces of other materials showing a green deposit.

In this way it was determined for instance that by moisturizing the green deposit on an asbestos-cement slab with the herbicide containing 19 % (w/w) of citric acid, the measurement of the amount of ATP resulted in a value varying between 3500 and 7100 RLU. The latter measurement was carried out nine days after applying the herbicide and after rainfall.

Generally it can be assumed that the herbicide, according to the invention, sees to it that biological matter like algae and/or mosses are detached and removed from the treated surface.

For certain porous materials a rain-shower or spraying with water accelerates the removal of the green deposit.

Of course, the invention is not restricted to the above mentioned examples and applications of the herbicide. In this way, the herbicide can, according to the invention, e.g. be applied to the destruction of mosses in lawns when the product contains 3 % to 4 % (w/w) of citric acid.

Furthermore, this herbicide can, according to the invention, contain derivatives of citric acid, such as salts of citric acid, e.g. sodium citrate.

It is of course also possible to add extra additives to the herbicide without diminishing its effectiveness. All sorts of colourants, aroma compounds or flavouring agents e.g. can be added. By adding certain products that reduce the surface tension of the herbicide, the moistening of the surface to be treated can be improved.

## Claims

1. Herbicide against green deposits, especially against algae and mosses, the active substance of which contains citric acid or a derivative of citric acid, like water soluble harmless salts, **characterized by** consisting of an aqueous solution, the active substance of which is solely citric acid or a water soluble derivative of citric acid.

2. Herbicide according to conclusion 1, **characterized by** the fact that the concentration of the mentioned active compound lies between 1 % and 25 % (w/w).

3. Herbicide according to conclusion 1 or 2, **characterized by** the fact that the concentration of the mentioned active compound lies between 3 % and 20 % (w/w).

4. Herbicide according to one of the conclusions 1 to 3, **characterized by** the fact that it contains known non-active additives chosen from the group formed by flavouring agents, colourants, foaming agents.

5. Herbicide according to one of the conclusions 1 to 4, **characterized by** the fact that it contains 0.1 to 1.0 % (w/w) of eucalyptol, specifically 0.5 %.

6. Herbicide according to one of the conclusions 1 to 5, **characterized by** the fact that it contains 1 to 3 % (w/w) of betaine, more specifically cocamidopropyl betaine (CAPB), and specifically 2 % (w/w) of betaine.

7. Herbicide according to one of the conclusions 1 to 6, **characterized by** the fact that it contains next to 0.0005 % (w/w) of Bitrex^{®}, more specifically denatonium benzoate.

8. Herbicide according to one of the conclusions 1 to 7, **characterized by** the fact that it contains 0.02 % (w/w) of Patent Blue, in particular the sodium compound of the [4-(α-(4-diethylaminophenyl)-5-hydroxy-2,4-disulfophenyl-methylidene)-2,5-cyclohexadien-1-ylidene]diethyl ammonium hydroxide inner salt.

9. Herbicide according to one of the conclusions 1 to 8, **characterized by** the fact that mentioned citric acid is formed by 2-hydroxypropane-1,2,3-tricarboxylic acid monohydrate.
